# EUROPÄISCHE PATENTSCHRIFT

(11) **EP 3 414 077 B1**
(45) Veröffentlichungstag und Bekanntmachung des Hinweises auf die Patenterteilung: **16.12.2020**
(21) Anmeldenummer: 16836221.8
(22) Anmeldetag: 28.12.2016
(51) Int. Cl.: B29C 65/04, A61J 1/10

(54) **WERKZEUG ZUM HF-VERSCHWEISSEN, ANLAGE ZUM HERSTELLEN EINES BEUTELS FÜR MEDIZINISCHE ZWECKE UND VERFAHREN ZUM BETREIBEN EINER SOLCHEN ANLAGE**
TOOL FOR HF WELDING, INSTALLATION FOR PRODUCING A BAG FOR MEDICAL PURPOSES AND METHOD FOR OPERATING SUCH AN INSTALLATION
OUTIL POUR LE SOUDAGE HF, INSTALLATION POUR FABRIQUER UN SAC À DES FINS MÉDICALES ET PROCÉDÉ DE PILOTAGE D'UNE TELLE INSTALLATION

(30) Priorität: 10.02.2016 DE 102016001428; 08.09.2016 DE 102016010766
(43) Veröffentlichungstag der Anmeldung: 19.12.2018
(73) Patentinhaber: Kiefel GmbH, 83395 Freilassing (DE)
(72) Erfinder: GSCHWENDTNER, Rupert, 83435 Bad Reichenhall (DE); KLEIN, Martin, 5400 Hallein (AT); BERGER, Rudolf, 83395 Freilassing (DE); HOBELSBERGER, Marco, 83416 Saaldorf-Surheim (DE)
(74) Vertreter: FARAGO Patentanwälte
(86) Internationale Anmeldenummer: PCT/DE2016/000440
(87) Internationale Veröffentlichungsnummer: WO 2017/137019

(56) Entgegenhaltungen:
- WO-A2-2007/140760
- JP-A- H08 117 318
- JP-A- H11 235 376
- JP-A- 2000 237 280

## Beschreibung

Die Erfindung betrifft ein Werkzeug zum HF-(Hochfrequenz-)Verschweißen, eine Anlage zum Herstellen eines Beutels für medizinische Zwecke und ein Verfahren zum Betreiben einer solchen Anlage.

Insbesondere betrifft die Erfindung eine Vorrichtung sowie ein Verfahren zum Betreiben einer HF-Kunststoffschweißmaschine, welche mit einem Oberwerkzeug und einem Unterwerkzeug aus je einer Mehrzahl von nebeneinander angeordneten Elektrodenlamellen ein eine Achsrichtung aufweisendes Einsetzteil mit zwei Folien zu einem Beutel verschweißt, die Anordnung der Elektrodenlamellen in der Vorrichtung und die Verwendung der Vorrichtung in der HF-Kunststoffschweißmaschine Kennzeichnend ist dabei, dass die Elektrodenlamellen entlang der Achsrichtung des Einsatzteils abwechselnd und senkrecht zu der Achsrichtung gegenpolig verpolt sind. Ferner können die Elektroden entlang der Achsrichtung des Einsetzteils durch ein Dielektrikum voneinander getrennt sein, welches einen Festkörper aufweist.

Weiter betrifft die Erfindung eine Anlage sowie ein Verfahren zum Herstellen eines Beutels für medizinische Zwecke mit einer Folienzuführung, einer Schweißstation und bevorzugt mit einer Befüllstation. Die Anlage kann zum Halten der Einsetzteile eine Vielzahl Haltestäbe aufweisen, wobei die Haltestäbe elektrisch vom HF-Stromkreis getrennt sind.

Hochfrequenzschweißen ist eine Schweißtechnik, bei welcher hochfrequente elektrische Energie in den Bereich eingeleitet wird, der verschweißt werden soll. Die resultierenden mechanischen Schwingungen führen zu Molekular- und Grenzflächenreibung, welche eine Erwärmung der Fügepartner hervorruft. Durch die Erwärmung erweichen die Fügepartner und verbinden sich im aufgeschmolzenen Zustand. Endet die Energieeinleitung, so kühlen die Fügepartner ab, erstarren und sind miteinander verschweißt. Die resultierende Verschweißung ist sehr stabil. Insbesondere kann sie wasserdicht sein.

Bei HF-Schweißverfahren wird unterschieden zwischen Verfahren, welche das homogene elektrische Hauptfeld auf der direkten Verbindung zwischen den entgegengesetzt gepolten Elektrodenpaaren, das nichthomogene elektrische Streufeld oder beide Anteile des gesamten elektrischen Feldes zwischen den Elektroden kombiniert für den Fügeprozess nutzen.

HF-Schweißverfahren werden häufig eingesetzt, um Folien miteinander zu einem luft- oder wasserdichten Beutel oder Schlauch zu verschweißen.

Ferner können HF-Schweißverfahren zum Einschweißen eines eine Achsrichtung aufweisenden Einsetzteils in zwei Folien verwendet werden.

In der Medizinprodukttechnik werden auf diese Weise Beutel hergestellt, in welche ein eine Achsrichtung aufweisendes Einsetzteil eingesetzt ist. Hierzu werden in der Regel Einsetzteile mit zwei Folien sowie die beiden Folien miteinander verschweißt. Ein oftmals Verwendung findendes Einsetzteil ist ein Kunststoffröhrchen, wodurch ein Beutel mit einer schlauchförmigen Öffnung hergestellt werden kann.

Generell ist bei der Anwendung von HF-Schweißverfahren zum Einschweißen eines Gegenstands in zwei Folien zu unterscheiden zwischen einem kleinen Röhrchen, welches zwischen zwei Folien eingeschweißt werden soll, und längeren Gegenständen oder Vollprofilgegenständen, welche eingeschweißt werden sollen.

Wenn ein kurzes Röhrchen zwischen zwei Folien eingeschweißt werden soll, wird zum Verschweißen oft eine Mandrene in das Röhrchen eingeführt. Wenn ein langes Röhrchen eingeschweißt werden soll, in welches aus technisch-praktischen Gründen eine Mandrene nicht eingeführt werden kann, oder wenn ein Vollprofilgegenstand wie beispielsweise ein Kabel eingeschweißt werden soll, kommen Werkzeuge ohne Mandrenen zum Einsatz.

Abele, Kunststoff-Fügeverfahren, Carl Hanser Verlag München, 1977, zeigt mehrere Verfahren dieser Art. So ist in der dortigen Abbildung 243b eine Elektrodenanordnung gezeigt, bei welcher die Elektrode am Unterwerkzeug einstückig ausgeführt ist, während die Elektrode am Oberwerkzeug dreistückig ausgeführt ist. Zusätzlich ist eine Zentralelektrode (also eine Mandrene) vorhanden. Mit diesem Werkzeug kann in einem Schweißvorgang sowohl eine Schweißverbindung zwischen einzuschweißenden Röhrchen und zwei Folien als auch zwischen den beiden Folien untereinander erstellt werden.

Weiter ist es bekannt, eine Verschweißung zwischen einem Röhrchen und zwei Folien in zwei nacheinander geschalteten Arbeitsschritten durchzuführen: zunächst wird die Mandrene mit Hochfrequenz beaufschlagt, während das einteilige Oberwerkzeug und das einteilige Unterwerkzeug jeweils auf Masse geschaltet werden. Dies erzeugt eine Verschweißung am Umfang des Röhrchens. Im zweiten Schritt wird zwischen den Folien eine Verschweißung hergestellt, oft entlang eines Beutelumfangs. Hierzu wird das Oberwerkzeug mit einer anderen Polarität beaufschlagt als das Unterwerkzeug, während die Mandrene neutral geschaltet wird. Die dadurch entstehende Verschweißung zwischen den beiden Folien erfolgt entweder sofort entlang des gesamten Beutelumfangs oder zunächst in einem kleinen Bereich seitlich des eingeschweißten Schlauches, dann mit einem Beutelumfangsschweißwerkzeug entlang des Beutelumfangs. Im letzteren Fall überlappen sich die beiden Schweißbereiche hinsichtlich der Folien, um eine dichte Verbindung herzustellen.

Bei Schweißverfahren mit einer Mandrene erfolgt die Schweißung sowohl über Hauptfelder zwischen den Elektroden als auch über Streufelder, welche sich an den Rändern der Elektroden ausbilden. Bei Schweißverfahren ohne Mandrenen hingegen erfolgen die Schweißvorgänge mit dem Kabel oder ähnlichen Gegenständen weitestgehend nur über Streufelder.

Die letztgenannten Verfahren, nämlich das Kabeleinschweißen mit HF-Schweißverfahren, beschreibt Abele in einem Folgebuch auf den Seiten 469, 470.

Ein Werkzeug sowie ein Verfahren zum Einschweißen von Schlauchstücken mit einer geteilten Mandrene ist aus der WO 2007/140760 A2 bekannt. Diese ermöglichen das Einschweißen eines Einsetzstückes sowie das Verschweißen von zwei Folien zu einem Beutel in einem einzigen Vorgang.

Die US 4,900,389 A offenbart ein HF-Schweißverfahren, mit dem ein radialsymmetrisches Schlauchende mit einem radialsymmetrischen Schlauchverschluss durch ein axiales Hauptfeld gefügt werden kann. Eine Verschweißung des Schlauchendes mit Folien zu einem Beutel offenbart die US 4,900,389 A hingegen nicht.

Die WO 2007/140760 A2 der gleichen Anmelderin offenbart eine Werkzeug zum HF-Verschweißen eines Einsetzteils mit zwei Folien, mit einem Oberwerkzeug und einem Unterwerkzeug, welche jeweils eine Mehrzahl von Elektrodenlamellen aufweisen, die in einer Längsrichtung des Einsetzteils abwechselnd polarisiert und senkrecht zu dieser Richtung symmetrisch polarisiert sind, wobei zwischen dem Einsetzstück orientierten Kanten benachbarter Elektrodenlamellen eine freie Verbindung besteht.

Die JP2000/237280 A stellt einen Beutel für medizinische Zwecke und einer Mundteilform bereit, durch die eine Folie, welches ein Material mit geringem dielektrischen Verlust umfasst, in kurzer Zeit durch dielektrisches Erhitzen ohne vorherigen Erwärmungsprozess geschmolzen und geschmolzen werden kann. Weiterhin offenbart JP2000/237280 eine Injektion, an der ein Öffnungsteil und ein Halsteil ausgebildet sind, welches zwischen zwei Kunstharzplatten oder Aufblasrohren aus der oberen Richtung angeordnet ist.

JP H11 235376 A offenbart Verfahren zur Herstellung eines medizinischen Beutels, der problemlos und fehlerfrei geöffnet werden kann, indem die Herstellung des Beutels auf zwei Vorgänge reduziert wird und die Bewegungen eines Schnitts und eines Schlitzes relativ zueinander verringert werden.

JP H08 117318 A offenbart ein Verfahren zur einfachen Steuerung der Schweißfestigkeit beim Schweißen eines Protektors eines Beutels für medizinische, bei dem ein beutelförmiger Hauptkörper durch Pressen und Schweißen unter Verwendung eines Satzes von oberen und unteren Formen für eine Beutelöffnung oder einer Form für eine Beutelöffnung mit vorderen und hinteren Formen mit Druckrillen gebildet wird, gefolgt vom Pressen unter Verwendung eines Satzes von oberen und unteren Kolbenformen.

Der Erfindung liegt die Aufgabe zu Grunde, dem Stand der Technik eine Alternative oder Verbesserung zur Verfügung zu stellen.

Nach einem ersten Aspekt der Erfindung löst die Aufgabe ein Werkzeug zum HF-Verschweißen eines eine Achsrichtung aufweisenden Einsetzteils mit zwei Folien zu einem Beutel, mit einem Oberwerkzeug und einem Unterwerkzeug aus je einer Mehrzahl von nebeneinander angeordneten Elektrodenlamellen, wobei die Elektrodenlamellen entlang der Achsrichtung abwechselnd verpolt und senkrecht zu der Achsrichtung gegenpolig verpolt sind.

Der Stand der Technik sah bislang vor, dass Werkzeuge zum HF-Verschweißen eines Einsetzteils mit zwei Folien, mit einem Oberwerkzeug und einem Unterwerkzeug, welche jeweils eine Mehrzahl von Elektrodenlamellen aufweisen, in Achsrichtung des Einsatzteils abwechselnd polarisiert und senkrecht zu dieser Richtung symmetrisch polarisiert sind (vgl. WO 2007/140760 A2). Abweichend wird hier vorgeschlagen, die Elektrodenlamellen in Achsrichtung des Einsetzteiles abwechselnd und senkrecht zu dieser Richtung gegenpolig zu polarisieren.

Vorteilhaft kann hierdurch erreicht werden, dass sich an jeder in Achsrichtung des Einsetzteils paarweisen Elektrodenlamellenpaarung ein elektromagnetisches Feld ergibt, welches im Folgenden als "Kreuzfeld" bezeichnet wird. Als Elektrodenlamellenpaarung sei hier ein jegliches Elektrodenlamellenpaar aus Oberwerkzeug und Unterwerkzeug verstanden, welches dem jeweils anderen gegenüberliegt. Eine paarweise Elektrodenlamellenpaarung beschreibt eine in Achsrichtung des Einsetzteils benachbarte Anordnung von Elektrodenlamellenpaaren.

Die Verschweißung mittels der durch die hier vorgestellte Werkzeuganordnung erreichten Kreuzfelder wird von den Erfindern griffig angesichts des geometrischen Aufbaus der Streufelder als Kreuzfeldschweißung bezeichnet.

Die Kreuzfeldschweißung ermöglicht das Einschweißen nahezu beliebiger Einsetzteile in nur einem Schweißvorgang.

Ferner führt die Kreuzfeldschweißung mitunter bei geeignet gewählten Parametern zu einer besonders stabilen und dichten Ausführung der Verschweißung eines eine Achsrichtung aufweisenden Einsetzteils mit zwei Folien zu einem Beutel.

Besonders bevorzugt weisen das Oberwerkzeug und das Unterwerkzeug eine identische Anzahl Elektrodenlamellen auf. Dies ermöglicht vorteilhaft eine besonders dichte Verschweißung der Folien miteinander.

Nach einem zweiten Aspekt der Erfindung löst die Aufgabe ein Werkzeug zum HF-Verschweißen eines eine Achsrichtung aufweisenden Einsetzteils mit zwei Folien zu einem Beutel, mit einem Oberwerkzeug und einem Unterwerkzeug aus je einer Mehrzahl von nebeneinander angeordneten Elektrodenlamellen, wobei die Elektrodenlamellen entlang der Achsrichtung durch ein Dielektrikum voneinander getrennt sind, welches einen Festkörper aufweist.

Die Verwendung eines einen Festkörper aufweisenden Dielektrikums zur elektrischen Trennung der Elektrodenlamellen aus Oberwerkzeug und Unterwerkzeug in Achsrichtung des Einsetzstückes ermöglicht besonders kleine Lamellenabstände zwischen den Elektrodenlamellen und reduziert ferner den Energiebedarf des hier vorgestellten Werkzeuges.

Ein Festkörper wird dabei als Materie verstanden, welche bei Raumtemperatur (20°C) einen festen Aggregatzustand aufweist. Diese Materie bzw. dieser Festkörper kann einen beliebigen Materialmix aufweisen. So kann er ebenfalls als Gewirk, Geflecht, Gelege, Vlies, Gewebe, Gestrick, usw. ausgeführt sein und somit auch aus fadenförmigen Strukturen bestehen. Ferner wird hier unter einem Festkörper auch ein poröses Material verstanden, welches Materie anderer Materialien in nicht festen Aggregatzuständen einschließt. Somit wird hier unter einem Festkörper auch ein nicht luft- oder wasserdichter Körper aus fadenförmigem bei Rautemperatur eine festen Aggregatzustand aufweisenden Material verstanden.

In einer vorteilhaften Ausgestaltung der Erfindung weist das Dielektrikum gegenüber den Elektroden einen Rücksprung oder einen Vorsprung auf bzw. es kann auch bündig mit den Elektroden sein. Vorstellbar sind auch Kombinationen aus den genannten Varianten.

Durch die geometrische Gestaltung des die Elektrodenlamellen in Achsrichtung des Einsetzstückes separierenden Dielektrikums kann eine vorteilhafte geometrische Gestaltung der Schmelze der Fügepartner beim HF-Verschweißen erreicht werden.

Diese vorteilhafte geometrische Gestaltung der Schmelze ermöglicht einerseits eine besonders feste und dichte Verschweißung und andererseits eine definierte geometrische Ausführung des Beutels im Bereich der Verschweißung, welche für einen Formschluss mit anderen Formteilen Anwendung finden kann.

Alternativ kann vorgesehen sein, dass das Dielektrikum mit den Elektroden bündig abschließt.

Auch die Variante der hier vorgeschlagenen Erfindung, bei der das Dielektrikum mit den Elektroden bündig abschließt, kann für die Anwendung der Kreuzfeldschweißung besonders vorteilhaft sein. Sie ermöglicht ein sehr konzentriertes Kreuzfeld, welches den Strombedarf des gesamten Werkzeuges verringert und eine besonders homogene Schmelze der Fügepartner erreicht.

Besonders bevorzugt weist das Dielektrikum an der Seite, welche der Folie zugewendet ist, eine Konturierung auf. Diese Konturierung kann beliebig ausgeprägt sein. Sobald der Kunststoff im Schweißwerkzeug anfängt zu fließen, verläuft er auch in die von der Konturierung des Dielektrikums vorgegebene Form und erhält so nach dem Wiedererstarren die negative Form der Konturierung. Somit ergibt sich eine spezielle gewünschte Konturierung im Bereich der Verschweißung. Diese kann besonders bevorzugt für einen Formschluss mit weiteren Bauteilen, die gemeinsam mit dem Beutel für medizinische Zwecke eine Baugruppe bilden können, eingesetzt werden. Auf diese Weise erschließt sich vollkommen neue Möglichkeiten für die Verwendung des hergestellten Beutels in der Medizintechnik.

Insbesondere vorteilhaft kann die Konturierung derart gestaltet sein, dass sie radialsymmetrisch ausgeführt ist und die Konturierung nicht von der Achsrichtung des Einsetzteils abhängig ist. Eine Variante dieser Konturierungsweise ist die Geometrie eines n-eckigen Sternes mit spitzen äußeren Kanten und abgerundeten inneren Kanten. Versuchsmuster haben gezeigt, dass sich in dieser Form der Konturierung besonders vorteilhafte Schweißergebnisse erzielen lassen.

Nach einem dritten Aspekt der Erfindung löst die gestellte Aufgabe eine Anlage zum Herstellen eines Beutels für medizinische Zwecke, mit einer Folienzuführung, einer Schweißstation und bevorzugt mit einer Befüllstation, wobei die Schweißstation ein Werkzeug nach einem der vorstehenden Aspekte der Erfindung aufweist.

Dieser Aspekt der Erfindung ermöglicht die Integration eines Werkzeuges nach einem der vorstehenden Aspekte in eine Schweißstation. Auf diese Weise kann erst das mit der Erfindung bevorzugt herzustellende Produkt, ein Beutel für medizinische Zwecke, hergestellt werden. Die Schweißstation kombiniert bekannte Aspekte einer Schweißstation mit einem der hier vorgeschlagenen Werkzeuge.

Besonders bevorzugt weist die Anlage zum Herstellen eines Beutels für medizinische Zwecke zum Halten des Einsetzteiles bzw. der Einsetzteile eine Vielzahl von Haltestäben auf, welche elektrisch vom HF-Stromkreis getrennt sind.

Die Haltestäbe ermöglichen dabei eine einfache wie effiziente Positionierung der Einsetzteile. Ferner verhindern die Haltestäbe, dass sich die Einsatzteile während einem der für die HF-Verschweißung notwendigen Verfahrensschritte verschieben bzw. ausversehen deplatziert werden.

Nach einem vierten Aspekt der Erfindung löst die gestellte Aufgabe ein Verfahren zum Betreiben einer Anlage zum Herstellen eines Beutels für medizinische Zwecke.

Das Verfahren ermöglicht die besonders bevorzugte Herstellung einer breiten wie flexiblen Produktpalette im Segment der Beutel für medizinische Zwecke.

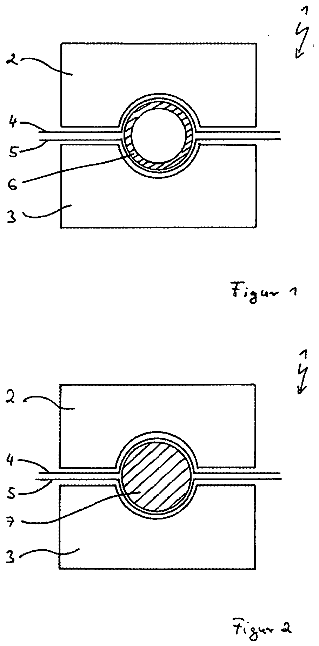

Nachstehend wird die Erfindung anhand eines Ausführungsbeispiels unter Bezugnahme auf die Zeichnung näher erläutert. Dort zeigen
- Fig. 1: schematisch in einem Schnitt ein Schweißwerkzeug, wobei die Normalenrichtung des Schnittes einer Achsrichtung eines Einsetzteiles entspricht, mit einem eingelegten noch nicht verschweißten schlauchförmigen Einsetzteil und zwei noch nicht verschweißten Folien, wobei die Schnittführung durch ein Elektrodenlamellenpaar verläuft,
- Fig. 2: einen Schnitt durch das Schweißwerkzeug, wobei die Normalenrichtung des Schnittes der Achsrichtung des Einsetzteiles entspricht, mit einem eingelegten noch nicht verschweißten kreisrunden Einsetzteil und zwei noch nicht verschweißte Folien,

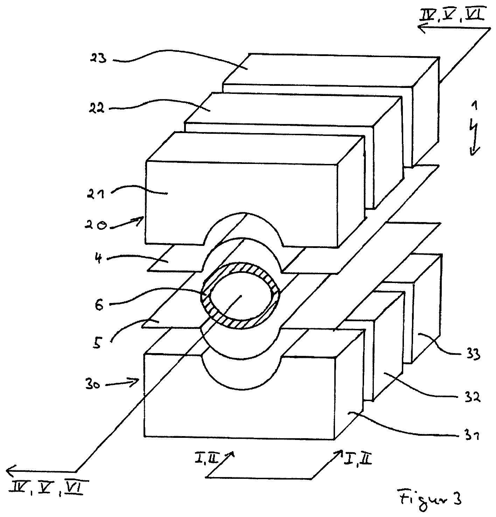

- Fig. 3: schematisch eine explodierte räumliche Ansicht eines Schweißwerkzeuges für ein eine Achsrichtung aufweisendes Einsetzteil mit einem eingelegten noch nicht verschweißten Einsetzteil und zwei noch nicht verschweißte Folien, wobei Oberwerkzeug und Unterwerkzeug beispielhaft jeweils drei nebeneinander angeordnete Elektrodenlamellen aufweisen,

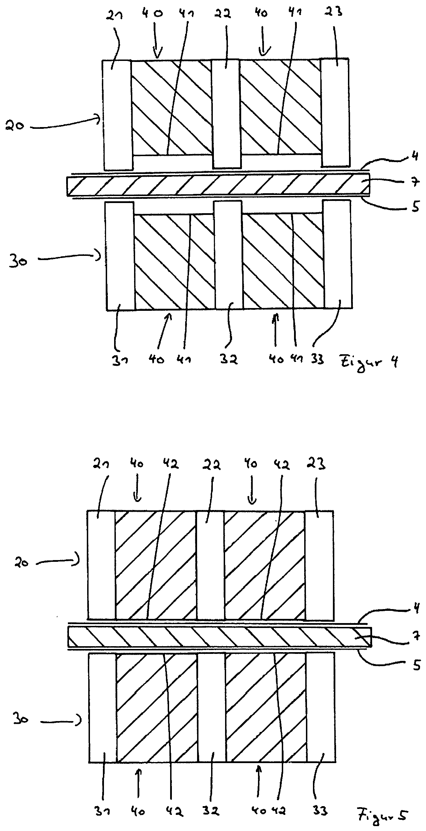

- Fig. 4: schematisch in einem Längsschnitt gemäß Kennzeichnung IV-IV in Figur 3 den Aufbau des HF-Schweißwerkzeuges mit einem Ausführungsbeispiel für ein Dielektrikum zwischen den Elektrodenlamellen, welches gegenüber den Elektrodenlamellen einen Rücksprung aufweist, wobei Oberwerkzeug und Unterwerkzeug beispielhaft jeweils drei nebeneinander angeordnete Elektrodenlamellen aufweisen,
- Fig. 5: schematisch in einem Längsschnitt gemäß Kennzeichnung V-V in Figur 3 den Aufbau des HF-Schweißwerkzeuges mit einem Ausführungsbeispiel für ein Dielektrikum zwischen den Elektrodenlamellen, welches gegenüber den Elektrodenlamellen bündig abschließt, wobei Oberwerkzeug und Unterwerkzeug beispielhaft jeweils drei nebeneinander angeordnete Elektrodenlamellen aufweisen, sowie

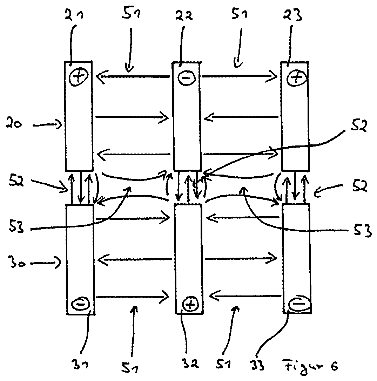

- Fig. 6: schematisch den Aufbau des HF-Feldes bei dem Werkzeug in einem Längsschnitt gemäß Kennzeichnung VI-VI in Figur 3, wobei Oberwerkzeug und Unterwerkzeug beispielhaft jeweils drei nebeneinander angeordnete Elektrodenlamellen aufweisen.

Das Schweißwerkzeug 1 in den Figuren 1 bis 3 besteht im Wesentlichen aus einem Oberwerkzeug 2 und einem Unterwerkzeug 3. Es handelt sich bei dem Werkzeug um ein solches, das dazu eingerichtet ist, ein HF-Flächenschweißverfahren durchzuführen, insbesondere ein reines HF-Flächenschweißverfahren.

Das HF-Flächenschweißverfahren, welches das Schweißwerkzeug 1 verwendet, soll zwischen die obere Folie 4 und die untere Folie 5 eine Achsrichtung aufweisende Einsetzteile dicht verschweißen.

Das Oberwerkzeug 2 und das Unterwerkzeug 3 sind zwei elektrisch geteilte Elektroden und können vom Schweißwerkzeug 1 unterschiedlich polarisiert werden. Die Elektroden ermöglichen eine dichte Verschweißung der oberen Folie 4 mit der unteren Folie 5 und zugleich in einem einzigen Schweißvorgang zwischen den Folien auch der Einsetzteile. Während des Schweißvorganges werden das Oberwerkzeug 2 und das Unterwerkzeug 3 unterschiedlich verpolt. Auf diese Weise stellt sich zwischen den Elektroden ein symmetrisches HF-Hauptfeld ein.

Beispielhaft kann so das schlauchförmige Einsetzteil 6 aus Figur 1 dicht mit den Folien verschweißt werden. Es ist jedoch nicht notwendig, dass das eine Achsrichtung aufweisende Einsetzteil ein Holkörper sein muss. Es kann auch beispielhaft ein kreisförmiger Vollkörper wie das kreisrunde Einsetzteil 7 (vgl. Figur 2) sein.

Es versteht sich, dass auch andere Querschnitte von Einsetzstücken vorteilhaft sein können, beispielsweise in Form eines Ovals, eines Polygons, eines Rechtecks, einer Raute mit spitzen oder abgerundeten Ecken oder eines Quadrats.

Diese Querschnitte können mit einer Öffnung im inneren versehen sein. Dabei ist es nicht zwingend erforderlich, dass diese Öffnung einen runden Querschnitt aufweist oder zentrisch positioniert ist. Auch hier sind andere Querschnitte der Öffnung von Einsetzteilen denkbar, beispielsweise in Form eines Ovals, eines Polygons, eines Rechtecks oder eines Quadrats.

Es sei ausdrücklich darauf hingewiesen, dass eine alternative, hier nicht dargestellte, vorteilhafte Konstruktion darin liegen kann, mehrere eine Achsrichtung aufweisende Einsetzteile auf dem Umfang des medizinischen Beutels zu verteilen. Auf diese Weise können medizinische Beutel mit mehreren Einsetzteilen erzeugt werden, beispielsweise mit mehreren schlauchförmigen Öffnungen.

Da das Werkzeug 1 hinsichtlich des Oberwerkzeugs 2 und des Unterwerkzeugs 3 bezüglich der Trennebene zwischen der oberen Folie 4 und der unteren Folie 5 symmetrisch aufgebaut ist, stellt sich sowohl hinsichtlich des HF-Hauptfeldes als auch hinsichtlich des HF-Streufeldes, welches später noch weitergehend eingeführt und erörtert wird, ein symmetrischer Aufbau während des Schweißvorganges ein. Die Verschweißung erfolgt daher sehr homogen.

Das Schweißwerkzeug 1 weist in einer Oberwerkzeug-Baugruppe 20 eine Mehrzahl von parallel nebeneinander angeordneten Oberwerkzeug-Elektrodenlamellen und in einer Unterwerkzeug-Baugruppe 30 eine Mehrzahl von parallel nebeneinander angeordneten Unterwerkzeug-Elektrodenlamellen auf.

Die Oberwerkzeug-Baugruppe 20 weist eine erste obere Elektrodenlamelle 21, eine parallele zweite obere Elektrodenlamelle 22 und eine parallele dritte obere Elektrodenlamelle 23 auf. Die Unterwerkzeug-Baugruppe 30 ist symmetrisch zur Oberwerkzeug-Baugruppe 20 aufgebaut. So befinden sich auf gleicher axialer Höhe eine erste untere Elektrodenlamelle 31, eine parallele zweite untere Elektrodenlamelle 32 und eine parallele dritte untere Elektrodenlamelle 33.

Es versteht sich, dass auch eine Paarung aus lediglich zwei parallelen oberen und symmetrisch unteren Elektrodenlamellen verwirklicht werden kann. Ferner ist auch eine beliebige Vielzahl paralleler oberer und symmetrisch unterer Elektrodenlamellen möglich.

Die Elektrodenlamellen sind zur Aufnahme des eine Achsrichtung aufweisenden Einsetzteils in einem zentralen Bereich mit Aussparungen versehen. Die Form der Aussparungen ist abhängig von der Geometrie des einzuschweißenden Einsetzteils.

In Folge der Aussparungen an den Elektrodenlamellen können diese im Betrieb mit Druck flächig an die Oberfläche des Einsetzteils gepresst werden, wobei die obere Folie 4 und die untere Folie 5 im Bereich der Aussparung das Einsetzteil umfassend eingepresst werden.

Während des Schweißvorganges wird eine Polarisierung der Elektrodenlamellen derart gewählt, dass die Elektrodenlamellen entlang der Achsrichtung abwechselnd verpolt und senkrecht zu der Achsrichtung gegenpolig verpolt sind (vgl. Figur 6).

Dabei stellen sich zwischen den parallel zueinander orientierten Elektrodenlamellen des Oberwerkzeuges 2 sowie zwischen den parallel zueinander orientierten Elektrodenlamellen des Unterwerkzeuges 3 achsparallele HF-Hauptfelder 51 ein.

Weiterhin resultieren aus der Anordnung der Elektrodenlamellen und der Verpolung der Elektrodenlamellen achsnormale HF-Hauptfelder 52 zwischen den symmetrisch zueinander befindlichen Elektrodenlamellen des Oberwerkzeuges 2 und des Unterwerkzeuges 3. Ferner ergeben sich ausgehend von den Kanten der Elektrodenlamellen HF-Streufelder 53, die dadurch ausgezeichnet sind, dass die Feldlinien nicht durch eine Gerade beschrieben werden können.

Die HF-Streufelder ergeben sich ebenfalls jeweils zwischen benachbarten Elektrodenlamellen mit unterschiedlicher Polarität.

Da das hier offenbarte Werkzeug 1 bei allen benachbarten Elektrodenlamellen sowohl in der getrennten Betrachtung des Oberwerkzeuges 2 und des Unterwerkzeuges 3 als auch in einer gesamtheitlichen Betrachtung des HF-Werkzeuges 1 für die Kreuzfeldschweißung eine unterschiedliche Polarität aufweist, ergibt sich das charakteristische Kreuzfeldmuster der HF-Streufelder 53.

Das Werkzeug 1 ermöglicht eine Verschweißung sowohl der Folien untereinander als auch der Folien an der Oberfläche des Einsetzteile in einem einzigen Schweißvorgang.

Die HF-Hauptfelder sind hauptverantwortlich für die Verschweißung der Folien miteinander, und die HF-Streufelder 53 sind hauptverantwortlich für die Verschweißung der Folien mit der Oberfläche des Einsetzteils.

Bei einer alternativen Ausführungsform des HF-Schweißwerkzeuges 1 (vgl. Figuren 4 und 5) sind die Elektrodenlamellen von Oberwerkzeug 2 und Unterwerkzeug 3 entlang der Achsrichtung des Einsetzteils durch ein Dielektrikum 40 voneinander getrennt, welches einen Festkörper aufweist.

Wie vorstehend bereits erläutert wurde, können auch in der hier beschriebenen alternativen Ausführungsform des HF-Schweißwerkzeuges 1 zwischen den Elektrodenlamellen nahezu beliebige Geometrien von Einsetzteilen eingeschweißt werden. Dabei ist gegebenenfalls die Kontur der Aussparung der Elektrodenlamellen anzupassen.

Die Geometrie des Dielektrikums 40 kann variiert werden. Dabei ist es möglich, dass das Dielektrikum 40 gegenüber den Elektrodenlamellen einen Rücksprung und/oder Vorsprung 41 aufweist oder bündig mit den Elektrodenlamellen abschließt (vgl. Flucht 42).

So ergibt sich die Möglichkeit, durch die Formgebung des Dielektrikums 40 die Kontur im Bereich der Verschweißung an dem hergestellten Beutel so auszugestalten, dass sich eine gewünschte Kontur ergibt, da der Kunststoff während des Schweißvorganges anfängt zu fließen und so in die Konturierung des Dielektrikums einfließen kann.

Diese Kontur kann ferner auch für den Formschluss mit daran ansetzenden Bauteilen angepasst werden.

Außerdem ermöglicht die Konturierung des Dielektrikums 40 die gezielte Verteilung des Energieeintrages in die einzelnen Bereiche der Verschweißung, sodass eine möglichst perfekte, homogene Verschweißung erzielt werden kann.

Durch diese Steuerungsmöglichkeit des Energieeintrages wird außerdem eine besonders energieeffiziente homogene HF-Verschweißung in nur einem einzigen Schweißvorgang ermöglicht.

### Liste der verwendeten Bezugszeichen:

- 1: Schweißwerkzeug
- 2: Oberwerkzeug
- 3: Unterwerkzeug
- 4: Obere Folie
- 5: Untere Folie
- 6: Schlauchförmiges Einsetzteil
- 7: Kreisrundes Einsetzteil
- 20: Oberwerkzeug-Baugruppe
- 21: erste obere Elektrodenlamelle
- 22: zweite obere Elektrodenlamelle
- 23: dritte obere Elektrodenlamelle
- 30: Unterwerkzeug-Baugruppe
- 31: erste untere Elektrodenlamelle
- 32: zweite untere Elektrodenlamelle
- 33: dritte untere Elektrodenlamelle
- 40: Dielektrikum
- 41: Vorsprung
- 42: Flucht
- 51: achsparalleles HF-Hauptfeld
- 52: achsnormales HF-Hauptfeld
- 53: HF-Streufeld

## Patentansprüche

1. Werkzeug zum HF-Verschweißen eines eine Achsrichtung aufweisenden Einsetzteils mit zwei Folien zu einem Beutel, mit einem Oberwerkzeug (2) und einem Unterwerkzeug (3) aus je einer Mehrzahl von nebeneinander angeordneten Elektrodenlamellen (21 - 23, 31 - 33),
***dadurch gekennzeichnet, dass***
die Elektrodenlamellen (21 - 23, 31 - 33) entlang der Achsrichtung abwechselnd verpolt und senkrecht zu der Achsrichtung gegenpolig verpolt sind;
und/oder die Elektrodenlamellen (21 - 23, 31 - 33) entlang der Achsrichtung durch ein Dieelektrikum (40) voneinander getrennt sind, welches einen Festkörper aufweist.

2. Werkzeug nach Anspruch 1, ***dadurch gekennzeichnet, dass*** das Oberwerkzeug (2) und das Unterwerkzeug (3) eine identische Anzahl Elektrodenlamellen (21 - 23, 31 - 33) aufweisen.

3. Werkzeug nach Anspruch 1 oder 2, ***dadurch gekennzeichnet, dass*** das Dielektrikum (40) gegenüber den Elektrodenlamellen (21 - 23, 31 - 33) einen Rücksprung und/oder Vorsprung (41) aufweist.

4. Werkzeug nach Anspruch 1 oder 2, ***dadurch gekennzeichnet, dass*** das Dielektrikum (40) mit den Elektrodenlamellen (21 - 23, 31 - 33) mit einer bündigen Flucht (42) abschließt.

5. Werkzeug nach einem der Ansprüche 3 oder 4, ***dadurch gekennzeichnet, dass*** das Dielektrikum (40) konturiert ist, wobei die Konturierung insbesondere die der Folie zugewandte Seite des Dielektrikums betreffen kann.

6. Werkzeug nach einem der Ansprüche 3 bis 5, ***dadurch gekennzeichnet, dass*** das Dielektrikum (40) mit Bezug auf die Achsrichtung des Einsetzteils eine radialsymmetrische Konturierung aufweist, welche in Achsrichtung des Einsetzteils konstant ist, wobei die Konturierung insbesondere die Geometrie eines n-eckigen Sternes mit spitzen äußeren Ecken und abgerundeten inneren Ecken aufweisen kann.

7. Anlage zum Herstellen eines Beutels für medizinische Zwecke, mit einer Folienzuführung, einer Schweißstation und bevorzugt einer Befüllstation,
***dadurch gekennzeichnet, dass***
die Schweißstation ein Werkzeug (1) nach einem der vorstehenden Ansprüche aufweist.

8. Anlage nach Anspruch 7, mit einem HF-Stromkreis, ***dadurch gekennzeichnet, dass*** sie zum Halten von Einsetzteilen eine Vielzahl Haltestäbe aufweist, wobei die Haltestäbe elektrisch vom HF-Stromkreis getrennt sind.

9. Verfahren zum Betreiben einer Anlage nach Anspruch 7 oder 8, mit den Schritten
a. Führen zweier Folien und eines eine Achsrichtung aufweisenden Einsetzteils in die Schweißstation;
b. Positionieren des Einsetzteils zwischen die zwei Folien;
c. Anlegen der zwei Folien an Flanken des Einsetzteils ; und
d. Beaufschlagen der Elektrodenlamellen (21 - 23, 31 - 33) mit hochfrequenter Elektrizität zum HF-Verschweißen des Einsetzteils mit den Folien, wobei die Elektrodenlamellen (21 - 23, 31 - 33) entlang einer Achsrichtung der Achse des Einsetzteils abwechselnd und senkrecht zu einer Achsrichtung gegenpolig polarisiert werden.

## Claims

1. Tool for HF welding of an insertion part having an axial direction and two films to form a bag, with an upper die (2) and a lower die (3), each consisting of a plurality of electrode lamellae (21-23, 31-33) arranged next to one another,
***characterized in that***
the electrode lamellae (21-23, 31-33) are alternately polarized in the axial direction and have opposite polarities orthogonally to the axial direction;
and/or **in that** the electrode lamellae (21-23, 31-33) are mutually separated in the axial direction by a dielectric (40) having a solid body.

2. Tool according to Claim 1, ***characterized in that*** the upper die (2) and the lower die (3) have identical numbers of electrode lamellae (21-23, 31-33).

3. Tool according to Claim 1 or 2, ***characterized in that*** the dielectric (40) has a recess and/or a protrusion (41) with respect to the electrode lamellae (21-23, 31-33).

4. Tool according to Claim 1 or 2, ***characterized in that*** the dielectric (40) is in flush alignment (42) with the electrode lamellae (21-23, 31-33).

5. Tool according to one of Claims 3 or 4, ***characterized in that*** the dielectric (40) is contoured, where the contouring can affect in particular the side of the dielectric which faces the film.

6. Tool according to one of Claims 3 to 5, ***characterized in that*** the dielectric (40) has a radially symmetrical contour with respect to the axial direction of the insertion part, the contour being constant in the axial direction of the insertion part, where the contour can in particular have the geometry of an n-angular star with sharp outer corners and rounded inner corners.

7. Installation for producing a bag for medical purposes, having a film feed, a welding station and preferably a filling station,
***characterized in that***
the welding station has a tool (1) according to one of the above Claims.

8. Installation according to Claim 7, having an HF circuit,
***characterized in that*** it contains a plurality of retention rods for retaining insertion parts, the retention rods being electrically separated from the HF circuit.

9. Method of operating an installation according to Claim 7 or 8, comprising the following steps:
a. directing two films and an insertion part having an axial direction into the welding station;
b. positioning the insertion part between the two films;
c. applying the two films to edges of the insertion part; and
d. applying high-frequency electricity to the electrode lamellae (21-23, 31-33) for providing HF welding of the insertion part with the films, the electrode lamellae (21-23, 31-33) being polarized alternately in an axial direction of the axis of the insertion part and having opposite polarities orthogonally to an axial direction.

## Revendications

1. Outil pour le soudage HF d'une pièce d'insertion présentant un sens axial comprenant deux films, en un sac, comprenant un outil supérieur (2) et un outil inférieur (3) d'une pluralité de lamelles d'électrodes (21-23, 31-33) disposées les unes à côté des autres,
**caractérisé en ce que**
les lamelles d'électrodes (21-23, 31-33) sont polarisées alternativement le long du sens axial et polarisées anti-pôle verticalement au sens axial;
et/ou les lamelles d'électrodes (21-23, 31-33) sont séparées l'une de l'autre le long du sens axial par un diélectrique (40) qui présente un solide.

2. Outil selon la revendication 1, **caractérisé en ce que** l'outil supérieur (2) et l'outil inférieur (3) présentent un nombre identique de lamelles d'électrodes (21-23, 31-33) .

3. Outil selon la revendication 1 ou 2, **caractérisé en ce que** le diélectrique (40) présente un retrait et/ou une saillie (41) par rapport aux lamelles d'électrodes (21-23, 31-33) .

4. Outil selon la revendication 1 ou 2, **caractérisé en ce que** le diélectrique (40) se raccorde aux lamelles d'électrodes (21-23, 31-33) par un alignement affleurant (42) .

5. Outil selon l'une des revendications 3 ou 4, **caractérisé en ce que** le diélectrique (40) est contouré, dans lequel le contour peut rencontrer en particulier le côté du diélectrique tourné vers le film.

6. Outil selon l'une des revendications 3 à 5, **caractérisé en ce que** le diélectrique (40) présente un contour symétrique radialement par rapport au sens axial de la pièce d'insertion, qui est constant dans le sens axial de la pièce d'insertion, dans lequel le contour peut présenter en particulier la géométrie d'une étoile à n branches avec des angles extérieurs pointus et des angles intérieurs arrondis.

7. Installation pour fabriquer un sac à des fins médicales, comprenant une alimentation de film, un poste de soudage et de préférence un poste de remplissage, **caractérisé en ce que** le poste de soudage présente un outil (1) selon l'une des revendications précédentes.

8. Installation selon la revendication 7, comprenant un circuit de courant HF, **caractérisé en ce qu'**elle présente une pluralité de tiges de maintien pour maintenir des pièces d'insertion, dans lequel les tiges de maintien sont séparées électriquement du circuit de courant HF.

9. Procédé de pilotage d'une installation selon la revendication 7 ou 8, comprenant les étapes suivantes:
a. guidage de deux films et d'une pièce d'insertion présentant un sens axial, dans le poste de soudage;
b. positionnement de la pièce d'insertion entre les deux films;
c. placement des deux films sur les flancs de la pièce d'insertion; et
d. alimentation des lamelles d'électrodes (21-23, 31-33) en électricité haute fréquence pour le soudage HF de la pièce d'insertion avec les films, dans lequel les lamelles d'électrodes (21-23, 31-33) sont polarisées alternativement le long d'un sens axial de l'axe de la pièce d'insertion et polarisées anti-pôle verticalement à un sens axial.
